(19)

Europäisches
Patentamt
European
Patent Office
Office européen
des brevets

(11) **EP 2 799 756 A1**

(12) **EUROPEAN PATENT APPLICATION**
published in accordance with Art. 153(4) EPC

(43) Date of publication:
**05.11.2014 Bulletin 2014/45**

(21) Application number: **12862280.0**

(22) Date of filing: **21.12.2012**

(51) Int Cl.:
*F16L 59/065* (2006.01)    *F16L 59/04* (2006.01)
*B01J 20/02* (2006.01)

(86) International application number:
**PCT/KR2012/011224**

(87) International publication number:
**WO 2013/100492 (04.07.2013 Gazette 2013/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2011 KR 20110142746**

(71) Applicant: **LG Hausys, Ltd.**
**Seoul 150-721 (KR)**

(72) Inventors:
• **KIM, Eun Joo**
**Uwang-si**
**Gyeonggi-do 437-836 (KR)**

• **JUNG, Seong Moon**
**Daejeon 305-707 (KR)**
• **LEE, Myung**
**Suwon-si**
**Gyeonggi-do 443-280 (KR)**
• **LEE, Ju-Hyung**
**Uiwang-si**
**Gyeonggi-do 437-767 (KR)**

(74) Representative: **Zacco Sweden AB**
**Valhallavägen 117**
**P.O. Box 5581**
**114 85 Stockholm (SE)**

(54) **VACUUM INSULATION MATERIAL COMPRISING A LARGE SPECIFIC SURFACE AREA GETTER MATERIAL**

(57)     The present invention provides a getter material comprising an adsorbent active substance with a specific surface area of 5~40m$^2$/g.

Also, the present invention provides a method for manufacturing the adsorbent active substance comprising the steps of: (a) selectively eluting cations by the acid processing of any one of calcium carbonate, barium carbonate, magnesium carbonate, aluminum carbonate, or strontium carbonate; (b) extracting the eluted cations; and (c) calcining any one of calcium carbonate, barium carbonate, magnesium carbonate, aluminum carbonate, or strontium carbonate from which cations have been extracted.

EP 2 799 756 A1

**Description**

[Technical Field]

The present invention relates to a vacuum insulation material comprising a high specific surface area getter material, more particularly, a getter material comprising an absorbent active substance with a specific surface area of $5\sim40m^2/g$.

[Background Art]

Prior vacuum insulation materials are manufactured by adding a glass fiber, which is used as a core material, in a multilayer film comprising an aluminium foil or in an outer skin material of a metalized film and equipping a getter and then vacuum exhausting. Among these, the getter material takes the role of absorbing water, air, or gas remaining inside the vacuum insulation material or flowing in from outside. Especially, residual moisture remaining in the core material, the outer skin material, or inside a vacuum chamber operates as a heat transmitting medium and increases thermal conductivity and thus becomes a reason for insulation performance reduction, so, to solve this, mostly absorbent active substances are used for the getter materials for absorbing moisture.

But, the absorbent active substance used for prior getter materials has a low level of the specific surface area, and due to this, reaction speed with water is slow and an absorbable amount of water in similar periods of time is limited and thus there are limitations in lowering initial thermal conductivity values.

Also in Korea patent publication No. 10-2003-0072717, a getter material that is an organic gas and a water-adsorbent is mentioned, and uses are applied differently by classifying the type of the getter material to a chemical getter material and a physical getter material, but getter materials with characteristics in specific surface area are not disclosed.

Thus, the present invention is intended to develop a getter material improving an initial insulation performance by quickly absorbing residual water inside a vacuum insulation material by applying an absorbent active substance with a higher specific surface area to a vacuum insulation material.

[Disclosure]

[Technical Problem]

An objective of the present invention is to provide a vacuum insulation material comprising a high specific surface area getter material comprising an absorbent active substance with a high specific surface area that may improve initial insulation performance.

Another objective of the present invention is to provide a method for manufacturing an absorbent active substance with an improved specific surface area by an acid processing of calcium carbonate, etc. that may be applied to a getter material.

[Technical Solution]

To achieve the above objective, a getter material comprising an absorbent active substance with a specific surface area of $5\sim40m^2/g$.

Also, to achieve the above objective, a method for manufacturing an absorbent active substance comprising the step of: (a) selectively eluting cations by the acid procesing of any one of calcium carbonate, barium carbonate, magnesium carbonate, aluminum carbonate, or strontium carbonate; (b) extracting the eluted cations; and (c) calcining any one of calcium carbonate, barium carbonate, magnesium carbonate, aluminum carbonate, or strontium carbonate from which cations have been extracted is provided.

[Advantageous Effects]

A getter material comprising an absorbent active substance with a high specific surface area does not have limitations in amounts of water absorption, and thus a vacuum insulation material comprising a getter material may increase initial insulation performance.

Also, by using a method for manufacturing an absorbent active substance comprising eluting, extracting, calcining calcium carbide, etc., a getter material comprising an absorbent active substance with a high specific surface area and a vacuum insulation material comprising the same may be obtained.

[Description of Drawings]

[Best Mode]

Advantages and features of the present invention, and method for achieving thereof will be apparent with reference to the examples that follow. But, it should be understood that the present invention is not limited to the following examples and may be embodied in different ways, and that the examples are given to provide complete disclosure of the invention and to provide thorough understanding of the invention to those skilled in the art, and the scope of the invention is limited only by the accompanying claims and equivalents thereof. Like components will be denoted by like reference numerals throughout the specification.

Hereinafter, the present invention will be described in detail.

Getter material

The present invention provides a getter material comprising an absorbent active substance with a specific surface area of $5{\sim}40m^2/g$.

The getter material of the present invention comprises the absorbent active substance. Any substance may be used for the absorbent active substance if it is an absorbent active substance with excellent absorption performance, but an absorbent active substance with a specific surface area of $5{\sim}40m^2/g$ is preferable, and an absorbent active substance with a specific surface area of $5{\sim}20m^2/g$ is more preferable. The ability to absorb water is excellent as the specific surface area of the absorbent active substance becomes higher, but it is preferable to satisfy the described range of the specific surface area for appropriate physical properties and absorbability. More specifically, when the specific surface area is less than $5m^2/g$, since reactivity is very weak, when applied to the vacuum insulation material, quickly absorbing water inside a vacuum insulation material is difficult because reaction does not occur well in room temperatures. To solve this, a separate activation in high temperatures is required, but there are concerns of polymer layers comprised in an outer skin material applied to a vacuum insulation material deteriorating when temperatures rise. On the contrary, when the specific surface area exceeds $40m^2/g$, there are concerns of a large portion of activity being already reduced even before being applied to the vacuum insulation material because it reacts with water in the atmosphere in the initial stage.

For examples of the absorbent active substance, at least one selected from the group consisting of an inorganic compound, metal oxide, metal halogenide, metal inorganic acid salt, organic acid salt, and a multifunctional inorganic compound may be used, and preferably, at least one selected from the group consisting of calcium oxide (CaO), barium oxide (BaO), magnesium oxide (MgO), strontium oxide (SrO), and aluminium oxide ($Al_2O_3$).

Especially, the absorbent active substance of the present invention may be comprised of calcium oxide (CaO). The absorbent active substance comprised by only the calcium oxide that may eliminate 25 to 35% of water of self-weight is inserted in the getter material of the invention. The calcium oxide, as may be observed from the reaction formula $CaO + H_2O \rightarrow Ca(OH)_2$, may contain far more amount of water than prior silica gel, etc. Additionally, not only can the calcium oxide stably remove water in a vacuum even at room temperatures, but may also have advantages of having very low costs. That is, the calcium oxide may stably remove water, but it may be observed that various gases may also be absorbed and removed in accordance with the types of the calcium oxide. Therefore, even if the absorbent active substance of the getter material is comprised by only the calcium oxide, a high insulation performance may be obtained.

By forming the absorbent active substance in the present invention in a powder form, the specific surface area of the getter material may be increased, and when the absorbent active substance is formed in a power form, by selecting the diameter of the particle, adjusting speed of absorption appropriate for the permeability of gas of the outer skin material is possible. As a result, an absorption load of the getter material becomes constant, and reliability corresponding to maintaining the performance of the absorbent active substance is improved.

In this instance, since, when the size of the powder of the absorbent active substance becomes greater, the specific surface area becomes smaller and reactivity decreases, and specifically, when the absorbent active substance is calcium oxide, the diameter of the calcium oxide in a power form may be 1 to 50 $\mu$m. When outside the range, opportunity for water and gas penetrating inside the vacuum insulation material to come in contact with the calcium oxide is lost and thus efficiency of eliminating water or gas may decrease. Especially, not being over 1mm is preferable, and this is because sufficient amount of the calcium oxide cannot be put into the getter material container.

The vacuum insulation material of the present invention may be formed with the outer skin material covering a core part comprising a core material and the getter material, and the core part, that is inside of the outer skin material, may be decompressed or in a vacuum state.

The core material in the present invention is formed inside the core part, and here, materials comprising the core material is not specifically limited. That is, in the present invention, all of the materials used commonly in the field of manufacturing vacuum insulation materials may be used. Generally, the types of the core materials used for the vacuum insulation materials are inorganic or organic materials with low thermal conductivity and generate small amounts of gas, and most of the common materials as above may be used in the present invention. For examples of the materials for the core material that may be used in the present invention, at least one selected from the group consisting of polyurethane, polyester, glass fiber, polypropylene, polyethylene, etc may be used. The materials described above may be used for the core material in a fiber, a foam, or in other shapes (i.e. a glass wool). Also, there are no particular limitations for shapes, sizes, thicknesses, etc. for the core material, and may be applicably altered in accordance with uses in which the vacuum insulation materials are applied.

**Method for manufacturing an active material for absorption**

A method for manufacturing an absorbent active substance comprising: (a) selectively eluting cations by the acid processing of any one of calcium carbonate, barium carbonate, magnesium carbonate, aluminum carbonate, or strontium carbonate; (b) extracting the eluted cations; and (c) calcining any one of the calcium carbonate, the barium carbonate, the magnesium carbonate, the aluminum carbonate, or the strontium carbonate from which cations have been extracted may be provided.

The calcium carbonate used in the present invention is derived from lime stones. The lime stone may comprise impurities of silicon dioxide, alumina, magnesia, etc. The lime stone is a sedimentary rock with the calcium carbonate as its main component, and have colors of white, grey or dark grey, black, and is formed in bulk or layered. For manufacturing the absorbent active substance of the present invention, by using the lime stone as a main component, the calcium oxide with a high specific surface area may be obtained, and may contribute to providing a getter material comprising the calcium oxide and a vacuum insulation material having the same.

In the step (a), the acid processing uses a weak acid. The reason is, if extracted with a strong acid such as hydrochloric acid and nitric acid, there are problems of impurities existing in the calcium carbonate, etc. eluting at the same time. Especially, in the case of the lime stones, when a strong acid is used, magnesium, which has similar characteristics with calcium, is eluted at the same time with the calcium and purity decreases, so impurities of the lime stone may be eliminated by using a weak acid, and high purity cations may be selectively eluted.

The weak acid used above is organic acid and may comprise lactic acid, citric acid, malic acid, oxalic acid, acetic acid, tartaric acid, adipic acid, succinic acid, maleic acid, glutamic acid, fumaric acid, pyruvic acid, gluconic acid, ctric acid, picric acid, aspartic acid, terebic acid, etc., and in an aspect that it may maintain constant purity of the cations to achieve an objective of the present invention, using citric acid is preferable.

In the step (b), the step extracting the eluted cations may have an extracting time of less than 30 minutes. This is, in an aspect that when the extraction time of the cations is longer than a certain time, the cations dissolve and then form recrystallization, it is preferable to be within 5 to30 minutes. More specifically, there is a tendency of an extraction ratio to somewhat increase until about 30 minutes, but when over 30 minutes, the extraction ratio rapidly decreases. This is because when over a certain time, the cations, which were dissolved in a weak acid, forms recrystallization, and the amount of the extracted cations decrease.

In the step (c), the step calcining any one of calcium carbonate, barium carbonate, magnesium carbonate, aluminum carbonate, or strontium carbonate may have 900 to 1000°C of calcining temperatures and 1 to 2 hours of calcination.

When examining the step (c) in more detail, after the acid processing step corresponding to any one of calcium carbonate, barium carbonate, magnesium carbonate, aluminum carbonate, or strontium carbonate the cations are extracted, then the extracted cations are filtered through a filter paper and dried, and the dried material is calcinated. For example, in the calcining step, when the calcium oxide is manufactured, and if calcinated in long periods of time or in high temperatures, there are concerns of quality reducing because reactivity decrease from grain growth. Therefore, calcining for a short period of time in low temperatures is important to obtain high quality lime products.

In the case of calcining time, no changes in mean particle diameter occur until one hour, but the particles start to grow and cohere with each other when over 2 hours. It is preferable for a calcining maintaining time to be within two hours to prevent quality reduction from coherence. Also, by having the calcining time within two hours, crystal growth may be suppressed and high quality and a high specific surface area absorbent active substance having a uniform particle distribution may be obtained.

In addition, when the calcining time is less than one hour, there are concerns that the calcium carbonate, etc. does not sufficiently react and remain as an impurity, and when the calcining time is more than two hours, particles start to grow and cohere with each other and there are concerns of quality reducing, so it is preferable for calcining maintaining time to be within two hours.

Especially, for calcining the calcium carbonate from which calcium ions are extracted, in the case of the calcining temperature, when thermal analyzing (TG-DTA) $CaCO_3$, the reaction ends at about 750°C or over, and since there are concerns that $CaCO_3$ may remain uncalcined in this temperature, the calcining temperature may be 900°C or over to supply sufficient energy. Also, when calcining temperature is over 1,000°C, it over calcinates and coherence among particles occur, and the calcining temperature to be 900 to 1,000°C is preferable.

More specifically, when the calcining temperature is below 900 °C, there are concerns that the calcium carbonate, etc. does not sufficiently react and remain as an impurity, and when the calcining temperature is over 1,000°C, there are problems of quality reduction from coherence from particles growing. By having the calcining time within the described range, temperature rising speeds becomes faster and fine particles are obtainable, and the absorbent active substance in a powder form having a diameter of 1 to 5mm may be manufactured.

The absorbent active substance manufactured by the described method for manufacturing has a specific surface area of 5~40m$^2$/g. By obtaining the absorbent active substance with a high specific surface area, the getter material improving the initial insulation performance by quickly absorbing residual water inside the vacuum insulation material may be provided.

Hereinafter, the present invention is described in further detail from the following examples. But, the following examples are only for exemplifying the invention and the scope of the present invention is not limited to the examples.

**Manufacturing examples (Examples and Comparative examples)**

Example 1

A citric acid solution with PH of 0 was manufactured by mixing 30g of citric acid and 200g of water. The manufactured citric acid solution was added in a solution, in which 30g of calcium carbonate in a solid powder state was sufficiently dissolved in 300g of water, and calcium ions were selectively eluted. Here, the extraction time was 30 minutes, and after filtering through a filtering paper, it was dried for one hour in a 130°C drying oven. By having the dried material at a calcining time of 2 hours at 1000 °C, a calcium oxide getter material in a powder form with a specific surface area of 15m$^2$/g and diameter of 10 $\mu$m was manufactured.

Example 2

A citric acid solution with PH of 0 was manufactured by mixing 30g of citric acid and 200g of water. The manufactured citric acid solution was added in a solution, in which 30g of barium carbonate in a solid powder state was sufficiently dissolved in 300g of water, and calcium ions were selectively eluted. Here, the extraction time was 10 minutes, and after filtering through a filtering paper, it was dried for one hour in a 130°C drying oven. By having the dried material at a calcining time of 2 hours at 1000 °C, a barium oxide getter material in a powder form with a specific surface area of 40m$^2$/g and diameter of 15 $\mu$m was manufactured.

Comparatve example 1

Calcium oxide (commercial reagent, JUNSEI) with a specific surface area of 3m$^2$/g was used.

Comparatve example 2

Calcium oxide (commercial reagent, Sonwonsc) with a specific surface area of 4m$^2$/g was used.

**<Experimental example1> - Comparison of reaction speed with water in accordance with a surface area of calcium oxide**

A moisture absorption ratio was calculated by leaving the Examples 1, 2 and Comparative examples 1 and 2 in an environment of 30 °C and a relative humidity of about 50%, and the obtained results are recorded in Table 1 below. The moisture absorption ratio in this instance is calculated from General equation 1 below.

[General equation 1]

$$\text{Moisture absorption ratio(\% by weight)} = (W_{water}(g) - W_{initial}(g))/W_{initial}(g) \times 100$$

Here, $W_{initial}(g)$ : weight before absorbing water
$W_{water}(g)$ weight after absorbing water

In contrast to showing increase in the moisture absorption ratio after 1 hour 30 minutes in the case of the Comparative examples 1 and 2, weight increases of about 8 % by weight after 30 minutes in the case of Example1 and about 5 % by weight after 30 minutes in the case of Example 2 were observed. As a result, when the specific surface area increases about 10 times, the speed in which the calcium oxide reacts with water increases by 5 to10 times.

Also, when the moisture absorption ratio was measured after 7 hours have passed, the weight increase was about 35 % by weight for Example 1, about 33 % by weight for Example 2, about 2 % by weight for Comparative example 1, and about 3 % by weight for Comparative example 2, and the reaction speed difference further becoming greater as time passed was observed. As a result, it may be observed that there are effects of the reaction speed becoming faster because the number of active points being able to react becomes greater as the specific surface area becomes higher.

[Table 1]

| Time(hr) | Moisture absorption ratio (weight%) | | | |
|---|---|---|---|---|
| | Example 1 | Example 2 | Comparative example 1 | Comparative example 2 |
| 0.0 | 0 | 0 | 0 | 0 |
| 0.5 | 7.80 | 4.63 | 0 | 0 |
| 1.0 | 12.00 | 8.21 | 0 | 0 |
| 1.5 | 14.93 | 17.91 | 0.02 | 0.15 |
| 2.0 | 17.43 | 22.58 | 0.12 | 0.48 |
| 4.0 | 26.71 | 28.70 | 0.69 | 1.34 |
| 5.0 | 29.71 | 31.30 | 0.97 | 1.85 |
| 6.0 | 32.59 | 31.92 | 1.28 | 2.52 |
| 7.0 | 34.15 | 32.54 | 1.65 | 3.16 |

**<Experimental example2> - Comparison of absorption performance with water in accordance with a surface area of calcium oxide**

A moisture absorption ratio was calculated by leaving the Example 1 and Comparative 2 in an environment of temperatures of 40 °C, 70°C, and 50%RH for 6 hours, and obtained results are recorded in Table 2 below. The moisture absorption ratio in this instance is calculated from [General equation 1] above.

As a result, relatively, in the case of Example 1 with a high specific surface area showed overall excellence in the moisture absorption ratio compared to Comparative example 2. Also, increase in the moisture absorption ratio in accordance with passing time was also much higher in Example 1. From this, it was observed that a getter material comprising the calcium oxide with the high specific surface area has better absorption performance.

[Table 2]

| Time(hr) | Moisture absorption ratio (weight%) | | | |
|---|---|---|---|---|
| | 40°C | | 70°C | |
| | Example 1 | Example 2 | Comparative example 1 | Comparative example 2 |
| 0 | 0 | 0 | 0 | 0 |
| 0.5 | 12.40 | 0.48 | 31.75 | 7.52 |
| 1 | 17.84 | 0.66 | 33.41 | 16.57 |
| 1.5 | 22.88 | 1.20 | 34.69 | 21.59 |
| 2 | 26.43 | 1.66 | 35.78 | 24.66 |
| 3 | 33.25 | 3.40 | 36.19 | 26.61 |
| 4 | 35.67 | 5.04 | 37.73 | 30.42 |
| 5 | 36.82 | 6.80 | 38.88 | 31.18 |
| 6 | 37.64 | 8.80 | 40.45 | 32.53 |

(continued)

| Time(hr) | Moisture absorption ratio (weight%) | | | |
|---|---|---|---|---|
| | 40°C | | 70°C | |
| | Example 1 | Example 2 | Comparative example 1 | Comparative example 2 |
| 7 | 37.93 | 10.71 | 41.77 | 33.32 |

**<Experimental example3> - Comparison of performance of vacuum insulation material applying a getter material**

A core material comprised of a glass board was manufactured with a size of 8x190x250mm (thicknessxwidthxlength) and 90g and was used as a core material for a vacuum insulation material. Next, an outer skin material of 23g was formed from 12 $\mu$m of a polyvinylidene chloride and polyethylene terephthalate film, 25 $\mu$m of a nylon film, 7 $\mu$m of an aluminum foil, and 50 $\mu$m of a linear low density polyethylene film. And then, a getter material manufactured by adding 5g of 100% pure calcium oxide in a pouch was comprised inside the core material of the vacuum insulation material. And then, the core material of the vacuum insulation material was inserted in a sealing body and then sealed in a 10Pa vacuum state and the vacuum insulation material in accordance with the present invention was manufactured, and the result was measured every one hour by aging at 75 °C.

As a result, referring to Table 3, when Example 1 was applied, there were effects of the initial insulation performance improving at an average of 0.2mW/mK every hour compared to Comparative 1. Also, Example 1 required a minimum of 3 or more hours for aging time because thermal conductivity did not stabilize even after 3 hours of aging at 75 °C, but in the case of Comparative examples 1 and 2, stable thermal conductivity values were shown from one hour of aging. This may be observed as an effect of the absorption performance stabilizing in one hour when high energy is applied to the getter material with fast reaction speeds.

Also, from the result from testing the Example 1 in accordance with various aging temperatures, Comparative example 1 required aging at 75 °C to activate the getter material, but the initial performance similar to that aged at 75 °C was realized in the case of Example 1 aging at 30 to 40 °C. As a result, it may be obseved as having effects of consuming lesser energy to activate the getter material because the reaction speeds became faster due to the high specific surface area.

[Table 3]

| Aging Time(hr) | Example 1 | | | Comparative example 1 |
|---|---|---|---|---|
| | 30°C | 40°C | 75°C | 75°C |
| 0 | - | - | 3.843 | 4.130 |
| 1 | 3.686 | 3.635 | 3.594 | 4.107 |
| 2 | 3.622 | 3.597 | 3.623 | 3.904 |
| 3 | 3.584 | 3.613 | 3.631 | 3.841 |

Also, the thermal conductivity values of the vacuum insulation materials left at room temperatures for one hour without a separate aging was measured.

As a result, referring to Table 4, since the thermal conductivity is relatively lower in the case of Examples 1 and 2, which apply the getter materials with the high specific surface area compared to the Comparative examples 1 and 2, which apply the getter materials with the low specific surface area, and it may be observed that they have a more excellent performance as vacuum insulation materials

[Table 4]

| | Example 1 | Example 2 | Comparative example 1 | Comparative example 2 |
|---|---|---|---|---|
| Thermal conductivity (mW/mK) | 3.76 | 3.57 | 4.63 | 4.41 |

**Claims**

1. A getter material comprising an adsorbent active substance with a specific surface area of 5~40m$^2$/g.

**2.** A getter material according to claim 1, wherein the adsorbent active substance is selected from the group consisting of calcium oxide, barium oxide, magnesium oxide, strontium oxide, aluminum oxide and mixtures thereof.

**3.** A getter material according to claim 1, wherein the adsorbent active substance is in a powder form.

**4.** A vacuum insulation material comprising the getter material according to claim 1.

**5.** A method for manufacturing an adsorbent active substance comprising the steps of:

    (a) selectively eluting cations by the acid processing of any one of calcium carbonate, barium carbonate, magnesium carbonate, aluminum carbonate, or strontium carbonate;
    (b) extracting the eluted cations; and
    (c) calcining any one of calcium carbonate, barium carbonate, magnesium carbonate, aluminum carbonate, or strontium carbonate from which cations have been extracted.

**6.** A method for manufacturing an adsorbent active substance according to claim 5, wherein the calcium carbonate is derived from limestone.

**7.** A method for manufacturing an adsorbent active substance according to claim 5, wherein the acid processing of step (a) uses weak acid.

**8.** A method for manufacturing an adsorbent active substance according to claim 7, wherein the weak acid is selected from the group consisting of lactic acid, citric acid, malic acid, oxalic acid, acetic acid, tartaric acid, adipic acid, succinic acid, maleic acid, glutamic acid, fumaric acid, pyruvic acid, gluconic acid, ctric acid, picric acid, aspartic acid, terebic acid, and mixtures thereof.

**9.** A method for manufacturing an adsorbent active substance according to claim 5, wherein the extracting eluted cations in step (b) is performed in less than or equal to 30 minutes of extraction time.

**10.** A method for manufacturing the adsorbent active substance according to claim 5, wherein the calcining any one of calcium carbonate, barium carbonate, magnesium carbonate, aluminum carbonate, or strontium carbonate with the cation extracted step in step (c) is performed in 900 to 1000°C of calcination temperatures and 1 to 2 hours of calcination time.

**11.** A method for manufacturing the adsorbent active substance manufactured according to any one of claim 5 to claim 10, wherein the adsorbent active substance has a specific surface area of $5\sim40m^2/g$.

## INTERNATIONAL SEARCH REPORT

International application No.

**PCT/KR2012/011224**

| A. CLASSIFICATION OF SUBJECT MATTER |
|---|
| *F16L 59/065(2006.01)i, F16L 59/04(2006.01)i, B01J 20/02(2006.01)i* |
| According to International Patent Classification (IPC) or to both national classification and IPC |

| B. FIELDS SEARCHED |
|---|
| Minimum documentation searched (classification system followed by classification symbols) |
| F16L 59/065; F25D 23/06; C01F 11/18; C08K 5/04; B65D 81/38; F16L 59/06; C01F 11/06 |

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: absorbent, getter, vacuum insulating material, calcium carbonate, sintering, specific surface area.

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | US 2002-0183431 A1 (YOHEI KAWAGUCHI et al.) 05 December 2002<br>See abstract, paragraphs [0007]-[0027] and claim 12. | 1-3<br>4-11 |
| Y<br>A | JP 08-159377 A (MATSUSHITA REFRIG CO LTD) 21 June 1996<br>See abstract, paragraph [0028] and figure 1. | 4<br>1-3,5-11 |
| Y<br>A | KR 10-0643316 B (SENBOOL INC.) 10 November 2006<br>See abstract, pages 3-5 and claims 1, 13, 16. | 5-11<br>1-4 |
| A | JP 2006-077910 A (MATSUSHITA ELECTRIC IND CO LTD) 23 March 2006<br>See abstract, paragraphs [0057]-[0064] and figure 1. | 1-11 |
| A | JP 2007-040455 A (MATSUSHITA ELECTRIC IND CO LTD) 15 February 2007<br>See abstract, paragraphs [0020]-[0034] and figure 1. | 1-11 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 FEBRUARY 2013 (26.02.2013) | **04 MARCH 2013 (04.03.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/011224**

| Patent document cited in search report | Publication date | Patent family member | Publication date |
|---|---|---|---|
| US 2002-0183431 A1 | 05.12.2002 | EP 1270675 A1<br>EP 1788034 A2<br>EP 1788034 A3<br>JP 03-885150 B2<br>JP 2006-291224 A<br>JP 2011-137165 A<br>KR 10-0537149 B1<br>TW 571601 A<br>US 6673436 B2<br>WO 01-88041 A1 | 02.01.2003<br>23.05.2007<br>17.10.2007<br>21.02.2007<br>26.10.2006<br>14.07.2011<br>16.12.2005<br>11.01.2004<br>06.01.2004<br>22.11.2001 |
| JP 08-159377 A | 21.06.1996 | CN 1143740 A0<br>EP 0715138 A2<br>EP 0715138 A3<br>KR 10-0188443 B1<br>US 05885682A A | 26.02.1997<br>05.06.1996<br>04.12.1996<br>01.06.1999<br>23.03.1999 |
| KR 10-0643316 B1 | 10.11.2006 | NONE | |
| JP 2006-077910 A | 23.03.2006 | JP 4613557 B2 | 19.01.2011 |
| JP 2007-040455 A | 15.02.2007 | NONE | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020030072717